# EUROPÄISCHE PATENTSCHRIFT

(11) **EP 2 609 353 B1**
(45) Veröffentlichungstag und Bekanntmachung des Hinweises auf die Patenterteilung: **06.07.2016**
(21) Anmeldenummer: 11745540.2
(22) Anmeldetag: 16.08.2011
(51) Int. Cl.: F16K 31/06, F15B 13/04

(54) **RASTENEINRICHTUNG**
ENGAGING DEVICE
DISPOSITIF POUR VERROUILLER

(30) Priorität: 24.08.2010 DE 102010039711
(43) Veröffentlichungstag der Anmeldung: 03.07.2013
(73) Patentinhaber: Deere & Company, Moline, IL 61265 (US); Bucher Hydraulics GmbH, 79771 Klettgau (DE)
(72) Erfinder: TRINLER, Martin, 68766 Hockenheim (DE); LÜÜS, Holger, 79761 Waldshut-Tiengen (DE); TODT, Wolfgang, 79771 Klettgau (DE)
(74) Vertreter: Reichert, Christian
(86) Internationale Anmeldenummer: PCT/EP2011/064054
(87) Internationale Veröffentlichungsnummer: WO 2012/025424

(56) Entgegenhaltungen:
- DE-A1- 4 012 832
- DE-A1-102004 049 963
- DE-A1-102007 057 882
- DE-A1-102008 032 219
- US-A1- 2009 224 191

## Beschreibung

Die Erfindung betrifft eine Rasteneinrichtung für ein hydraulisches Ventil, mit einem Gehäuse und einer im Gehäuse verschiebbar gelagerten Rastwelle. Ferner betrifft die Erfindung ein hydraulisches Ventil mit einer solchen Rasteneinrichtung sowie eine entsprechende hydraulische Anordnung.

Es sind hydraulische Anordnungen für landwirtschaftliche Fahrzeuge, beispielsweise Traktoren oder Erntemaschinen, bekannt, die hydraulische Ventile mit Rasteneinrichtungen umfassen. Rasteneinrichtungen werden eingesetzt, um eine Haltekraft an einem hydraulischen Ventil zu erzeugen bzw. um einen im hydraulischen Ventil angeordneten Ventilschieber in einer angesteuerten Stellung zu halten. Es ist dabei nicht unüblich hydraulische Ventile mit vier anwählbaren Schieberstellungen einzusetzen, welche mechanisch über einen Betätigungshebel in der Fahrerkabine ansteuerbar sind. Die Schieberstellungen umfassen üblicherweise eine Heben-, eine Neutral-, eine Senken- und eine Schwimmstellung. In der Regel ist die Schieberstellung in Schwimmstellung mechanisch gerastet, d.h. nach Verbringen des Ventilschiebers in die Schwimmstellung durch Betätigung des Betätigungshebels wird die Schwimmstellung auch nach Loslassen des Betätigungshebels beibehalten. Ferner ist es bekannt, Rasteneinrichtungen auch für die Heben- und Senkenstellung vorzusehen. Da Rastfunktionen oftmals nicht für jede Betriebsart erwünscht sind, ist es ferner üblich verschiedene Rastmodi vorzusehen, die von einem Benutzer in Abhängigkeit der Anwendung aktiviert werden können. Dabei kann beispielsweise zum Betreiben eines Frontladers ein Rastmodus vorgesehen sein, bei dem die Rastfunktion deaktiviert ist. Ferner kann ein Rastmodus vorgesehen sein, der eine Deaktivierung der Rastfunktion bei Erreichung eines bestimmten Betriebsdrucks vorsieht. Ein weiterer Rastmodus kann eine Dauerrastung vorsehen, zum Beispiel für den Betrieb von Hydraulikmotoren. Des Weiteren ist es bekannt, derartige hydraulische Ventile mit einer Funktion auszustatten, die ein Zurückstellen des Ventilschiebers in die Neutralstellung beinhaltet, wenn die Hydraulikversorgung ausfällt. Letztere Funktion ist als Primärfunktion gegenüber den zuvor beschriebenen Rastmodi priorisiert, so dass Rasteneinrichtungen üblicherweise als hydraulische Schaltelemente ausgeführt werden, mit denen eine Deaktivierung einer Rastfunktion bei Aussetzen der Hydraulikversorgung sichergestellt ist. Nachteilig ist, dass sowohl die Aktivierung als auch die Deaktivierung einer Rastfunktion nur in Abhängigkeit einer hydraulischen Energieversorgung erfolgen kann. Hydraulische Rasteneinrichtungen sind üblicherweise als selbständige Bauteile am Ventilgehäuse befestigt. Zur Bereitstellung der Rastmodi sind derartige Rasteneinrichtungen mit einem Stellmittel versehen, durch welches der entsprechend gewünschte Rastmodus auswählbar ist. Das Stellmittel zur Verstellung bzw. Auswahl der Rastmodi ist dabei direkt an der Rasteneinrichtung angeordnet und damit in nachteiliger Weise nicht in unmittelbarer Nähe zum Betätigungshebel des hydraulischen Ventils. Ferner stellt sich nachteilig dar, dass bei der Positionierung des Ventils zwecks Bedienbarkeit des Stellmittels eine Zugänglichkeit durch eine Bedienperson berücksichtigt werden muss, wodurch Positioniermöglichkeiten eingeschränkt werden.
Die DE 10 2008 032 219 A1 zeigt ein als Magnetventil ausgebildetes 4/3-Schieberventil bei dem ein Doppelhub-Magnetsystem vorgesehen ist. Durch elektronisch steuerbare Erregung sind definiert variierbare Auslenkungen eines Ventilelements einsteuerbar. Ebenfalls zu nennen sind die DE 10 2004 049963 A1, die DE 10 2007 057882 A1, die DE 40 12 832 A1 und die US 2009/224191 A1.
Die der Erfindung zugrunde liegende Aufgabe wird darin gesehen, eine Rasteneinrichtung der eingangs genannten Art anzugeben, durch welche die vorgenannten Probleme überwunden werden.
Die Aufgabe wird erfindungsgemäß durch die Lehre der Patentansprüche 1, 11 und 12 gelöst.
Weitere vorteilhafte Ausgestaltungen und Weiterbildungen der Erfindung gehen aus den Unteransprüchen hervor.
Erfindungsgemäß wird eine Rasteneinrichtung der eingangs genannten Art derart ausgebildet, dass die Rasteneinrichtung wenigstens eine auf der Rastwelle gelagerte magnetisierbare Ringankeranordnung und eine am Gehäuse um die Ringankeranordnung angeordnete elektrische Magnetspulenanordnung umfasst, wobei durch Bestromung der Magnetspulenanordnung eine Stellkraft auf die Ringankeranordnung erzeugbar ist. Dadurch, dass die Rasteneinrichtung elektromagnetisch betrieben wird, kann die Aktivierung bzw. Deaktivierung einer Rastfunktion nicht nur in Abhängigkeit einer hydraulischen Energieversorgung erfolgen, sondern beliebige sensorisch bestimmbare Kriterien geschaffen werden, die einer Aktivierung und Deaktivierung zugrundegelegt werden können. Ferner werden Einschränkungen für die Positionierung des Stellmittels vermieden, da das für die Auswahl der Rastmodi vorgesehene Stellmittel nicht direkt an der Rasteneinrichtung angeordnet sein muss, sondern an einer beliebigen Stelle in der Fahrerkabine, insbesondere in unmittelbarer Nähe zum Betätigungshebel des hydraulischen Ventils angeordnet werden kann.

Die Ringankeranordnung ist koaxial zur Rastwelle angeordnet und derart mit dieser verbunden, dass die durch Bestromung der Magnetspulenanordnung erzeugte Stellkraft in axialer Richtung der Rastwelle auf die Rastwelle übertragbar ist. Die Ringankeranordnung kann dabei auf verschiedene Art und Weise auf der Rastwelle axial festgesetzt sein, sei es durch einen Wellenabsatz, Sicherungsring oder durch andere axiale Sicherungsmittel.

Die Rastwelle ist mit einer Stellfederanordnung verbunden, durch welche die Rastwelle mit der Ringankeranordnung in eine Neutralstellung drängbar ist, wobei in der Neutralstellung die Ringankeranordnung mittig zur Magnetspulenanordnung ausgerichtet ist. Die Neutralstellung sieht vor, dass die über das hydraulische Ventil gesteuerten Hydraulikverbindungen unterbrochen sind, das hydraulische Ventil also in eine geschlossene Stellung verbracht wird. Durch die Stellfederanordnung wird gewährleistet, dass wenn keine Stellkraft auf die Rastwelle ausgeübt wird, die Rastwelle und ein damit verbundener Ventilschieber durch eine von der Stellfederanordnung erzeugten Stellkraft entsprechend in die Neutralstellung verbracht wird. Die Stellfeder ist so ausgebildet und angeordnet, dass sobald der Ventilschieber bzw. die Rastwelle aus der Neutralstellung heraus bewegt wird, eine entgegen der Bewegung wirkende Stellkraft erzeugt wird. Die Stellfederanordnung kann eine oder mehrere Stellfedern in Form einer Schraubenfeder oder Spiralfeder oder dergleichen umfassen.

Die Magnetspulenanordnung umfasst eine erste und eine zweite, vorzugsweise entgegengesetzt gepolte Magnetspule, wobei die Magnetspulen mittensymmetrisch zur Magnetspulenanordnung angeordnet sind. Mittensymmetrisch bedeutet, dass die Magnetspulenanordnung eine Symmetrielinie aufweist und beidseitig der Symmetrielinie baugleich ausgebildet ist, dass heißt beidseitig der Symmetrielinie jeweils eine Magnetspule ausgebildet ist. Die Ringankeranordnung ist dabei derart ausgebildet und angeordnet, dass diese in der Neutralstellung der Rastwelle mittig zur Symmetrielinie der Magnetspulenanordnung positioniert ist.

Die Rastwelle ist mit der Ringankeranordnung in eine erste Auslenkstellung verschiebbar, wobei mit der ersten Auslenkstellung die Ringankeranordnung in Richtung der ersten Magnetspule verbringbar ist. D.h., dass wenn das hydraulische Ventil betätigt und der Ventilschieber in eine erste Auslenkstellung verschoben wird, gleiches auch mit der Rastwelle geschieht. Entsprechend wird die auf der Rastwelle gelagerte Ringankeranordnung dabei in Richtung der ersten Magnetspule verschoben.

Entsprechend kann der Ventilschieber bzw. die Rastwelle mit der Ringankeranordnung in eine der ersten Auslenkstellung entgegengesetzte zweite Auslenkstellung verschoben werden, wobei mit der zweiten Auslenkstellung die Ringankeranordnung in Richtung der zweiten Magnetspule verbringbar ist.
Insgesamt kann die Magnetspulenanordnung nun derart bestromt werden, dass eine auf die Ringankeranordnung wirkende magnetische Haltekraft erzeugt werden kann, welche die Ringankeranordnung in einer ihrer Auslenkstellungen hält, wobei in der ersten Auslenkstellung eine Bestromung der ersten Magnetspule aktivierbar und in der zweiten Auslenkstellung eine Bestromung der zweiten Magnetspule aktivierbar ist. Bei Aktivierung der Bestromung einer Magnetspule wird die andere Magnetspule entsprechend deaktiviert. In der Neutralstellung wird eine Bestromung der Magnetspulenanordnung deaktiviert d.h. eine Bestromung sowohl der einen als auch der anderen Magnetspule wird unterbrochen, so dass die sich bei Verschieben aus der Neutralstellung aufbauende Stellkraft der Stellfederanordnung alleinig auf die Rastwelle und damit auf den Ventilschieber wirkt. Um bestimmte Rastmodi bereitzustellen, kann sowohl in der ersten als auch in der zweiten Auslenkstellung zusätzlich auch eine Deaktivierung der Bestromung in Abhängigkeit von verschiedenen Zustandsparametern erfolgen, sei es ein hydraulischer Arbeitsdruck (bzw. Lastdruck), eine Drehzahl einer Hydraulikpumpe, eines hydraulischen Verbrauchers, eines Verbrennungsmotors etc.
In einer alternativen Ausführungsform kann die Rasteneinrichtung auch derart ausgebildet sein, dass in der ersten Auslenkstellung eine Bestromung der ersten und zweiten Magnetspule oder in der zweiten Auslenkstellung eine Bestromung der ersten und zweiten Magnetspule aktivierbar ist und in der Neutralstellung eine Bestromung der Magnetspulenanordnung deaktivierbar ist. Eine Deaktivierung der einen Magnetspule bei Aktivierung der anderen Magnetspule erfolgt dann nicht. Dadurch kann die elektronische Beschaltung der Magnetspulenanordnung vereinfacht werden, so dass bei einer Bestromung der Magnetspulenanordnung bzw. der Magnetspulen nicht zwischen den Auslenkstellungen unterschieden werden muss. Eine Deaktivierung der Magnetspulen in der Neutralstellung sowie in den Auslenkstellungen in Abhängigkeit verschiedener Zustandsparameter kann wie oben bereits beschrieben erfolgen.

Die Ringankeranordnung ist beidseitig durch einen Haltering axial gesichert und umfasst zwei ferromagnetische Stellringe. Der Haltering kann als einer in einer Ringnut der Rastwelle angeordneter Sicherungsring oder Spannring ausgebildet sein. Bei einer nicht beanspruchten Ausführungsform ist es jedoch auch denkbar einen derartigen Haltering nur einseitig vorzusehen und die andere Seite über einen auf der Rastwelle ausgebildeten Absatz zu sichern. Der Stellring muss derart dimensioniert und ferromagnetisch ausgebildet sein, dass die durch die Magnetspulen erzeugbare Magnetkraft eine entsprechend benötigte Haltekraft erzeugen kann.
Die Rasteneinrichtung kann ferner eine mechanische Raste umfassen, wobei die mechanische Raste wenigstens eine auf dem Umfang der Rastwelle angeordnete Kugel, eine in der Rastwelle eingebrachte Ringnut und ein mit einer Stellkraft beaufschlagtes Steuerelement umfasst, wobei das Steuerelement mit der Kugel derart in Eingriff steht, dass die Kugel entsprechend der Stellkraft in die Ringnut drängbar ist. Das Steuerelement kann eine auf der Rastwelle verschiebbar gelagerter und hydraulisch betätigbarer Stellring bzw. Ringkolben sein, der die Kugel in der Ringnut hält bzw. entsprechend angesteuert die Kugel freisetzt.

Die Ringankeranordnung beinhaltet einen ersten ferromagnetischen Stellring, einen zweiten ferromagnetischen Stellring und einen zwischen den Stellringen angeordnetes Spannelement, durch welches die Stellringe axial auseinander rückbar und gegen die jeweiligen Halteringe drängbar sind. Die Stellringe und das Spannelement sind dabei als einheitliche Ringankeranordnung zu verstehen, welche durch entsprechende Halteringe gemäß obiger Definition auf der Rastwelle angeordnet und axial gesichert sind.
Die Ringankeranordnung ist in eine über die erste oder zweite Auslenkstellung hinaus verschiebbare dritte Auslenkstellung verbringbar, in welcher die beiden Stellringe entgegen einer Stellkraft durch das Spannelement zum gegenseitigen Anschlag verbringbar sind. Die dritte Auslenkstellung wird beispielsweise eingenommen, wenn der Ventilschieber in eine Schwimmstellung gebracht wird. Ausgehend von der Neutralstellung geht die dritte Auslenkstellung dabei über die erste oder zweite Auslenkstellung hinaus. Gemäß obiger Ausführungen kann für eine derartige dritte Auslenkstellung eine mechanische Raste vorgesehen sein, die zusätzlich unabhängig von der elektromagnetischen Rastfunktion mechanisch oder hydraulisch bzw. hydromechanisch aktivierbar ist.
Die oben erwähnte Rasteneinrichtung in all ihren oben beschriebenen Ausführungsformen kann in einem hydraulischen Ventil Anwendung finden, wobei das hydraulische Ventil mit einem Ventilgehäuse und einem im Ventilgehäuse verschiebbar gelagerten Ventilschieber ausgebildet ist und wobei das Ventilgehäuse und das Gehäuse der Rasteneinrichtung sowie der Ventilschieber und die Rastwelle einteilig oder mehrteilig miteinander in Verbindung stehen.

Ferner kann die oben erwähnte Rasteneinrichtung mit all ihren oben beschriebenen Ausführungsformen in einem hydraulischen Ventil einer hydraulischen Anordnung Anwendung finden, wobei die hydraulische Anordnung ferner einen Betätigungshebel zum Betätigen des hydraulischen Ventils und einen damit verbundenen hydraulischen Verbraucher, eine mit dem hydraulischen Ventil verbundene Hydraulikpumpe, einen mit dem hydraulischen Ventil verbundenen Hydrauliktank, wenigstens eine mit dem hydraulischen Verbraucher und/oder dem hydraulischen Ventil verbundene Sensoreinrichtung, eine Eingabeeinrichtung und einer mit der Sensoreinrichtung und der Eingabeeinrichtung verbundenen elektronischen Steuereinheit umfasst. Die Sensoreinrichtung kann dabei insbesondere zur Erfassung eines im hydraulischen Ventil wirkenden Arbeitsdrucks ausgelegt sein. Die in der Rasteneinrichtung vorgesehene Magnetspulenanordnung ist von der Steuereinheit in Abhängigkeit der Sensoreinrichtung und der Eingabeeinrichtung bestrombar. Derartige hydraulische Anordnungen sind beispielsweise an Baumaschinen oder Landmaschinen zu finden und werden eingesetzt, um entsprechende hydraulische Verbraucher von einem Führerhaus oder einer Fahrzeugkabine zu betätigen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Querschnittsansicht einer erfindungsgemäßen Rasteneinrichtung in einem an ein hydraulisches Ventil montierten Zustand,
- Fig. 2: eine perspektivische Seitenansicht einer Rasteneinrichtung gemäß Figur 1 in einem nicht montiertem Zustand und
- Fig. 3: einen schematischen Schaltplan einer erfindungsgemäßen hydraulischen Anordnung mit einer Rasteneinrichtung gemäß der Figuren 1 oder 2.

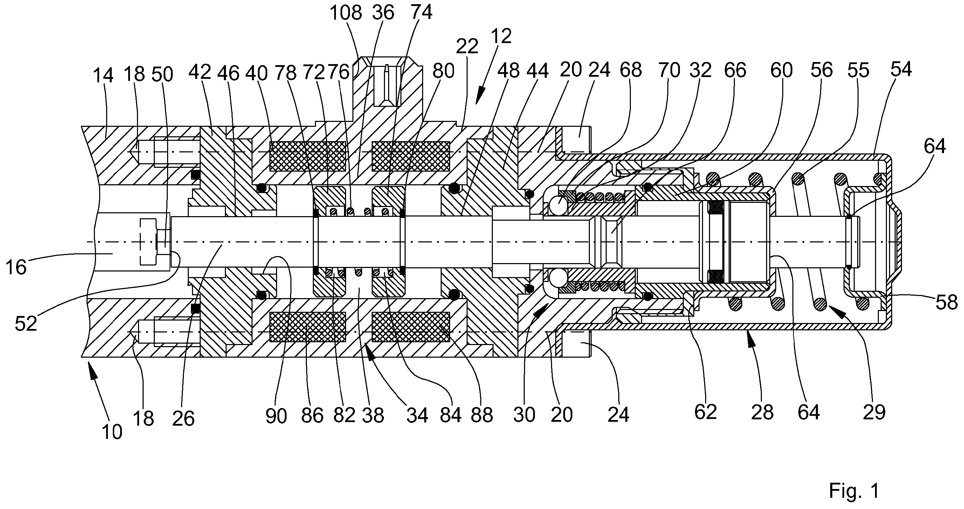

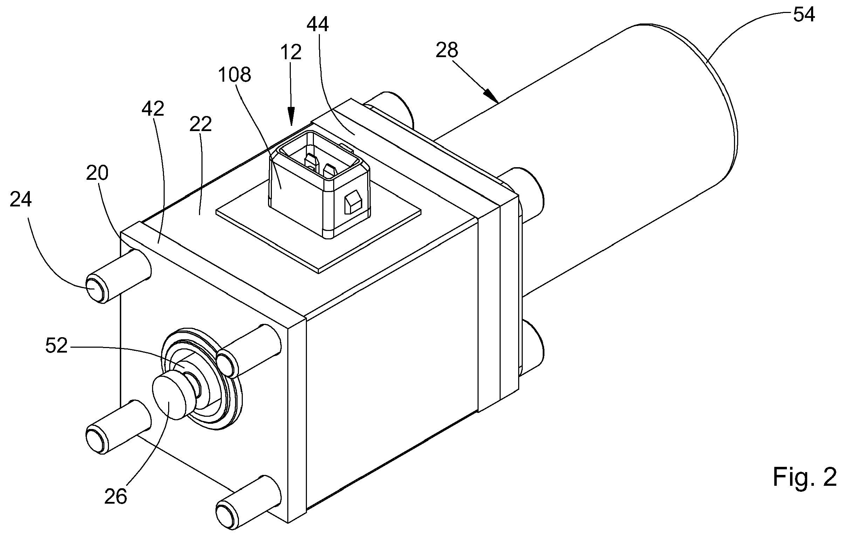

Die Figur 1 zeigt eine an einem hydraulischen Ventil 10 angeschlossene Rasteneinrichtung 12. Das Ventil 10 umfasst ein Ventilgehäuse 14 und einen darin axial verschiebbar gelagerten Ventilschieber 16. Das Ventil 10 ist beispielsweise als 4/4-Wegeventil ausgebildet und weist eine erste Auslenkstellung, beispielsweise eine Hebenstellung, eine Neutralstellung, eine zweite Auslenkstellung, beispielsweise eine Senkenstellung und eine dritte Auslenkstellung, beispielsweise eine Schwimmstellung auf. Durch Betätigen des Ventilschiebers 16 werden die entsprechenden Stellungen eingestellt. Das Ventilgehäuse 14 weist Befestigungsbohrungen 18 auf. Wie insbesondere in Figur 2 zu erkennen ist, sind entsprechend ausgerichtete Durchgangsbohrungen 20 an einem Gehäuse 22 der Rasteneinrichtung 12 angeordnet, wobei das Gehäuse 22 der Rasteneinrichtung 12 durch Befestigungsbolzen 24 an das Ventilgehäuse 14 befestigt ist.

Die Rasteneinrichtung 12 umfasst ferner eine im Gehäuse 22 axial verschiebbar gelagerte Rastwelle 26. Das Gehäuse 22 umfasst des Weiteren einen Stellfederbereich 28 mit einer Stellfederanordnung 29, einen ersten Rastenbereich 30 für eine mechanische Raste 32, sowie einen zweiten Rastenbereich 34 für eine elektromagnetische Raste 36, in dem eine Ringankeranordnung 38 und eine Magnetspulenanordnung 40 angeordnet sind.

Der zweite Rastenbereich 34 des Gehäuses 22 ist durch eine erste und zweite Gehäusewand 42, 44 abgegrenzt und weist jeweils einen Lagerbereich 46, 48 zur axial verschiebbaren Lagerung der Rastwelle 26 auf.

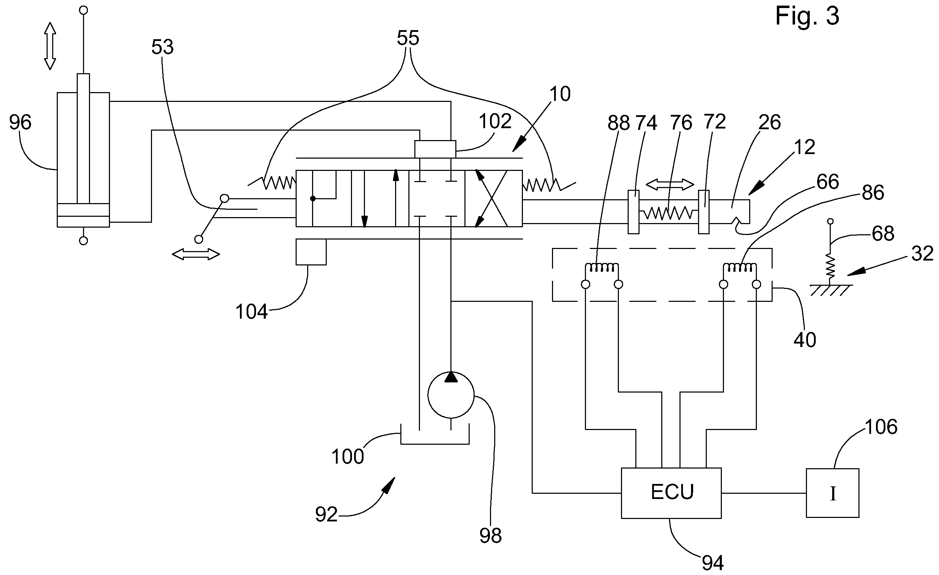

An der ersten Gehäusewand 42 ist das Gehäuse 22 mittels der Befestigungsbolzen 24 an das Ventilgehäuse 14 angeflanscht, wobei die Rastwelle 26 mit dem Ventilschieber 16 verbunden ist, vorzugsweise durch eine übliche Steckverbindung in Form einer Stecknut oder eines Gabelkopfes 50, die bzw. der mit einer an der Rastwelle 26 ausgebildeten Ringnut 52 in Eingriff steht. Durch die unmittelbare Verbindung der Rastwelle 26 mit dem Ventilschieber 16 nimmt auch die Rastwelle 26 bei Betätigung des Ventilschiebers 16 durch einen Betätigungshebel 53 (siehe Figur 3) eine entsprechende erste Auslenkstellung bzw. Hebenstellung, Neutralstellung, zweite Auslenkstellung bzw. Senkenstellung oder eine dritte Auslenkstellung bzw. Schwimmstellung ein.

An der zweiten Gehäusewand 44 schließt sich der erste Rastenbereich 30 sowie dazu angrenzend der Stellfederbereich 28 an. Beide Bereiche des Gehäuses 22 werden über die Befestigungsbolzen 24 mit der zweiten Gehäusewand 44 bzw. mit dem zweiten Rastenbereich 34 verbunden.

Der Stellfederbereich 28 weist einen Gehäusetopf 54 auf, welcher über die Befestigungsbolzen 24 an den ersten Rastenbereich 30 befestigt ist und die Stellfederanordnung 29 umschließt. Die Stellfederanordnung 29 umfasst eine als Schraubenfeder ausgebildete Stellfeder 55, die zwischen eine erste topfartige Lagerbuchse 56 und eine zweite topfartige Lagerbuchse 58 gespannt ist. Die erste Lagerbuchse 56 ist auf einer am ersten Rastenbereich 30 ausgebildeten Lagerhülse 60 axial verschiebbar gelagert, wobei sich die Lagerbuchse 56 zum einen randseitig gegen einen am ersten Rastenbereich 30 ausgebildeten Begrenzungsring 62 und zum anderen innenbodenseitig gegen einen an der Rastwelle 26 ausgebildeten Absatz 64 abstützt, so dass die erste Lagerbuchse 56 zum einen auf der Lagerhülse 60 und zum anderen auf der Rastwelle 26 in Richtung der zweiten Lagerbuchse 58 axial verschiebbar ist. Die zweite Lagerbuchse 58 ist auf der Rastwelle 26 axial verschiebbar gelagert, wobei sich die Lagerbuchse 58 zum einen randseitig gegen den Gehäusetopf 54 und zum anderen innenbodenseitig gegen einen an der Rastwelle 26 angeordneten Sicherungsring 64 abstützt, so dass die zweite Lagerbuchse 58 auf der Rastwelle 26 in Richtung der ersten Lagerbuchse 56 axial verschiebbar ist. Diese Anordnung der Stellfeder 55 bewirkt, dass wenn die Rastwelle 26 axial verschoben wird, also aus einer voreingestellten Neutralstellung heraus bewegt wird, sich die topfartigen Lagerbuchsen 56, 58 aufeinander zu bewegen und die Stellfeder 55 komprimieren. Dadurch wird eine Stellkraft bzw. Rückstellkraft erzeugt, durch die die Rastwelle 26 in ihre Neutralstellung gedrängt wird.

Der erste Rastenbereich 30, in dem die mechanische Raste 32 angeordnet ist, umschließt einen Bereich der Rastwelle 26, der mit einer Ringnut 66 versehen ist. Ferner sind auf der Rastwelle 26 auf dem Umfang verteilte Rastkugeln 68 angeordnet. Die Rastkugeln 68 werden von einem als federvorgespannter Stellring ausgebildetes Steuerelement 70 an die Oberfläche der Rastwelle 26 gedrückt, wobei durch die Federvorspannung des Steuerelements 70 eine entsprechende Stellkraft auf die Rastkugeln ausgeübt wird. Sobald die Rastwelle 26 derart verschoben wird, dass die Ringnut 66 mit den Rastkugeln 68 in Eingriff treten können, werden letztere von dem Steuerelement 70 in die Ringnut 66 gedrückt, woraufhin die Rastwelle 26 in dieser Stellung einrastet bzw. gehalten wird. Die Stellung der Rastwelle 26, in der die mechanische Raste 32 einrastet ist in dem gezeigten Beispiel die Schwimmstellung für den Ventilschieber 16. Beim Einrasten in die Schwimmstellung muss mit einer am Ventilschieber 16 angreifenden Betätigungskraft die entgegenwirkende Stellkraft der Stellfeder 55 überwunden und von der Haltekraft der mechanischen Raste 32 gehalten werden, demnach die Haltekraft der mechanischen Raste 32 größer als die Stellkraft der Stellfeder 55 sein muss, damit die Rastwelle sicher und dauerhaft in der Schwimmstellung einrastet und gehalten wird. Um den Ventilschieber 16 bzw. die Rastwelle 26 aus der Schwimmstellung heraus zu bewegen, muss hingegen eine geringere Betätigungskraft aufgebracht werden, da die Betätigung des Ventilschiebers 16 durch die Stellkraft der Stellfeder 55 unterstützt wird.

Die im zweiten Rastenbereich 34 angeordnete Ringankeranordnung 38 umfasst einen ersten und einen zweiten Stellring 72, 74. Die Stellringe 72, 74 sind aus einem ferromagnetischen, also aus einem von einer bestromten Magnetspule magnetisierbaren Material bzw. Werkstoff hergestellt. Die Stellringe 72, 74 sind axial beweglich auf der Rastwelle 26 angeordnet und werden durch ein Spannelement 76 in Form einer Schraubenfeder gegen auf der Rastwelle 26 angeordnete Halteringe 78, 80 gedrückt. Die Stellringe 72, 74 können somit entgegen der Federkraft bzw. Stellkraft des Spannelements 76 aufeinander zu bewegt werden, wobei das Spannelement 76 in entsprechend ausgebildete Aussparungen 82, 84 an den Stellringen 72, 74 versenkbar ist, so dass die Stellringe 72, 74 zum gegenseitigen Anschlag gebracht werden können.

Die im zweiten Rastenbereich 34 angeordnete Magnetspulenanordnung 40 umfasst eine erste und eine zweite Magnetspule 86, 88. Die Magnetspulen 86, 88 sind in der Gehäusewandung des Gehäuses 22 koaxial zur Rastwelle 26 und um die Ringankeranordnung 38 herum eingefasst. Ferner sind die Magnetspulen 86, 88 in Bezug auf die Längsrichtung der Rastwelle 26 symmetrisch zur Mitte der Ringankeranordnung 38 angeordnet, so dass rechts und links der Mitte der Ringankeranordnung 38 jeweils eine Magnetspule 86, 88 in Höhe eines Stellrings 72, 74 angeordnet ist. Mit anderen Worten, die Ringankeranordnung 38 befindet sich bei Neutralstellung des Ventilschiebers 16 mittig zur Magnetspulenanordnung 40. Die Anordnung der Stellringe 72, 74 in Bezug auf die erste Gehäusewand 42 und die zweite Gehäusewand 44 ist derart bemessen, dass bei einer axialen Verschiebung des Ventilschiebers 16 in eine erste Auslenkstellung bzw. Senkenstellung, der erste Stellring 72 an der ersten Gehäusewand 42 und bei einer axiale Verschiebung des Ventilschiebers 16 in eine zweite Auslenkstellung bzw. Hebenstellung, der zweite Stellring 74 an der zweiten Gehäusewand 44 zur Anlage kommt. Ferner ist in der ersten Gehäusewand 42 im Bereich der Lagerstelle 46 eine radiale Ausnehmung 90 vorgesehen, die sich entlang der Rastwelle 26 erstreckt und so bemessen ist, dass eine axiale Verschiebung des Ventilschiebers 16 in eine der Schwimmstellung entsprechende dritte Auslenkstellung ermöglicht wird. Dies erfolgt derart, dass sich der Haltering 78 in die Ausnehmung 90 versenken kann, während der erste Stellring 72 an der ersten Gehäusewand 42 und der zweite Stellring 74 am ersten Stellring 72 zur Anlage kommt. Das Spannelement 76 wird dabei zusammengedrückt und versenkt sich seinerseits in den an den Stellringen 72, 74 ausgebildeten Aussparungen 82, 84.

Durch entsprechendes Bestromen der Magnetspulenanordnung 40 bzw. der Magnetspulen 86, 88 können bei Betätigung des Ventilschiebers 16 durch den Betätigungshebel wie folgt Haltekräfte und somit Rastzustände für die Rastwelle bzw. dem Ventilschieber 16 erzielt werden. Bei Verschieben des Ventilschiebers 16 aus der Neutralstellung heraus in die erste Auslenkstellung bzw. Senkenstellung wird der erste Stellring 72 zur ersten Magnetspule 86 bzw. zur ersten Gehäusewand 42 hin bewegt. Eine Bestromung der ersten Magnetspule 86 bewirkt sodann eine Magnetisierung des ferromagnetisch beschaffenen ersten Stellrings 72, womit eine Haltekraft in Richtung der ersten Gehäusewand 42 auf den Stellring 72 ausgeübt wird. Der Stellring 72 wird also mit einer bestimmten Halte- bzw. Rastkraft, die eine durch die Stellfeder 55 aufgebrachte Rückstellkraft übersteigt, in der Senkenstellung gehalten. Sobald die Bestromung der ersten Magnetspule 86 aufgehoben wird, entfällt auch die Haltekraft und die Rastwelle 26 bzw. der Ventilschieber 16 wird durch die Rückstellkraft der Stellfeder 55 wieder in die Neutralstellung verbracht. Bei Verschieben des Ventilschiebers 16 aus der Neutralstellung heraus in die zweite Auslenkstellung bzw. Hebenstellung wird der zweite Stellring 74 zur zweiten Magnetspule 88 bzw. zur zweiten Gehäusewand 44 hin bewegt. Eine Bestromung der zweiten Magnetspule 88 bewirkt sodann eine Magnetisierung des ferromagnetisch beschaffenen zweiten Stellrings 74, womit eine Haltekraft in Richtung der zweiten Gehäusewand 44 auf den Stellring 74 ausgeübt wird. Der Stellring 74 wird also mit einer bestimmten Halte- bzw. Rastkraft, die eine durch die Stellfeder 55 aufgebrachte Rückstellkraft übersteigt, in der Hebenstellung gehalten. Sobald die Bestromung der zweiten Magnetspule 88 aufgehoben wird, entfällt auch die Haltekraft und die Rastwelle 26 bzw. der Ventilschieber 16 wird durch die Rückstellkraft der Stellfeder 55 wieder in die Neutralstellung verbracht. In beiden Fällen können durch entsprechende Bestromung und Ausbildung der Magnetspulen 86, 88 und der Stellringe 72, 74 die Haltekräfte variieren. Bei Verschieben des Ventilschiebers 16 in die dritte Auslenkstellung bzw. Schwimmstellung wird der erste Stellring 72 ebenfalls zur ersten Magnetspule 86 bzw. zur ersten Gehäusewand 42 hin bewegt, wobei darüber hinaus die Rastwelle 26 noch ein Stück weiter verschoben wird, bis der zweite Stellring 74 auf dem ersten Stellring 72 zur Anlage kommt und die Rastkugeln 68 in die Ringnut 66 eingreifen und eine zusätzliche Haltekraft bzw. Rastkraft erzeugen. Je nach Ausgestaltung kann das Verschieben in die Schwimmstellung mit oder ohne Bestromung der ersten Magnetspule 86 erfolgen, wobei eine Bestromung der ersten Magnetspule 86 die mechanische Raste 32 entlasten würde, da die mechanische Raste 32 dann nicht die vollständige Rückstellkraft der Stellfeder 55 sowie die Rückstellkraft des Stellelements 76 aufbringen müsste, sondern jeweils ein Teil durch die Haltekraft der Magnetspule 86 aufgebracht werden kann.

Wie in Figur 3 für eine mögliche hydraulische Anordnung 92 dargestellt ist, erfolgt eine Bestromung der Magnetspulenanordnung 40 durch eine mit der Magnetspulenanordnung 40 verbundenen elektronischen Steuereinheit 94. Die hydraulische Anordnung 92 umfasst, neben dem hydraulischen Ventil 10 mit Rasteneinrichtung 12, einen mit dem Ventil 10 verbundenen hydraulischen Verbraucher 96, hier in Form eines Hydraulikzylinders, sowie eine mit dem hydraulischen Ventil 10 verbundene Hydraulikpumpe 98, einen mit dem hydraulischen Ventil 10 verbundenen Hydrauliktank 100, wenigstens eine mit der Hydraulikpumpe 98 und/oder dem hydraulischen Ventil 10 verbundene Sensoreinrichtung 102, 104 und eine Eingabeeinrichtung 106.

Über den Betätigungshebel 53 kann das Ventil 10 in seine entsprechenden Stellungen (Senkenstellung, Neutralstellung (wie abgebildet), Hebenstellung und Schwimmstellung) geschaltet werden. Beispielsweise wird in der Senkenstellung der Hydraulikzylinder eingefahren, in der Neutralstellung ist das Ventil 10 geschlossen, in der Hebenstellung wird der Hydraulikzylinder ausgefahren und in der Schwimmstellung werden beide Kammern des Hydraulikzylinders mit dem Hydrauliktank 100 verbunden und die Verbindung zur Hydraulikpumpe 98 unterbrochen. In der Schwimmstellung (linke Position des Ventils in Figur 3) gelangt die Rastwelle 26 mit ihrer Nut in den Bereich der Rastkugeln 68 und wird in dieser Stellung mit einer gewissen Haltekraft mechanisch gerastet gehalten. Wie schon erwähnt, kann in einem ersten Rastenmodus zur Unterstützung der mechanischen Raste 32 eine Bestromung der elektromagnetischen Raste 36 erfolgen, wenn in die Schwimmstellung geschaltet wird. Diesbezüglich wird eine entsprechende Eingabe in der Eingabeeinrichtung 106 vorgenommen bzw. die Steuereinheit 94 entsprechend programmiert. Die Schwimmstellung kann durch die Sensoreinrichtung 104 (hier ein Positionssensor) detektiert und ein entsprechendes Steuersignal an die Steuereinheit 94 gesendet werden, sodann eine Bestromung der Magnetanordnung 40 über eine entsprechende elektrische Anschlussvorrichtung 108 erfolgen kann. Im vorliegenden Fall würde eine Bestromung der Magnetspule 86 erfolgen, wodurch eine Magnetisierung des Stellrings 72 und damit eine die mechanische Raste 32 unterstützende Haltekraft erzeugt werden würde. An Stelle einer Sensoreinrichtung 104 kann beispielsweise auch eine Verschaltung von zu den Magnetspulen 86, 88 führenden Stromleitungen mit dem Ventilschieber 16 bzw. der Rastwelle 26 erfolgen, so dass ein entsprechendes Bestromen der Magnetspulen 86, 88 durch Verschieben des Ventilschiebers 16 bzw. der Rastwelle 26 ausgelöst wird.

In einem weiteren Rastmodus, der über eine entsprechende Eingabe in der Eingabeeinrichtung 106 vorgenommen werden kann, ist eine Deaktivierung der elektromagnetischen Raste 36 vorgesehen, das heißt, es wird in keiner der Ventilstellungen ein Steuersignal zur Bestromung der Magnetspulenanordnung 40 generiert. Der Ventilschieber 16 wird durch die Stellfeder 55 in seine Neutralstellung verbracht, sobald der Betätigungshebel 53 losgelassen wird (es sei denn der Ventilschieber befindet sich in der Schwimmstellung, in der die mechanische Raste 32 greift). Ein derartiger Rastmodus ("Laderbetrieb") wird üblicherweise gewählt, wenn ein Frontlader betrieben bzw. wenn eine Rastfunktion der Ventilschieberstellung ungewünscht ist.

Für den Betrieb von z.B. einem Hydraulikmotor oder anderen dauerbetriebenen Verbrauchern ist es oftmals wünschenswert, eine Dauerrastung vorzusehen, so dass der Betätigungshebel nicht dauerhaft gehalten werden muss. Diesbezüglich ist ein weiterer Rastmodus ("Motorbetrieb") für Dauerbetrieb vorgesehen, der ebenfalls über die Eingabeeinrichtung 106 einstellbar ist. Die Steuereinheit 94 erfasst dabei ein entsprechendes Signal von der Sensoreinheit 104 bezüglich der Position des Ventilschiebers 16 und generiert je nach Ventilschieberstellung (Senkenstellung oder Hebenstellung) eine entsprechende Bestromung der Magnetspulenanordnung 40 (in der Senkenstellung wird die Magnetspule 86 und in der Hebenstellung die Magnetspule 88 bestromt).

Ferner ist ein weiterer Rastmodus vorgesehen, der eine druckabhängige Abschaltung vorsieht, d. h. dass bei Erreichen eines vorgebbaren hydraulischen Arbeitsdrucks (bzw. Lastdrucks) eine Entrastung vorgenommen wird bzw. die elektromagnetische Raste 36 aufgehoben wird. Dieser Rastmodus (Zylinderbetrieb) ist beispielsweise beim Betreiben eines Hydraulikzylinders von Vorteil, so dass ein bestimmter Arbeitsdruck nicht versehentlich überschritten werden kann. Diesbezüglich kann eine Bedienperson eine entsprechende Rastmodiauswahl an der Eingabeeinrichtung 106 vornehmen und einen gewünschten maximalen Arbeitsdruck eingeben. Die Arbeitsdruckeingabe kann dabei an einer gesonderten Eingabeeinrichtung (nicht gezeigt) oder an derselben erfolgen. Die Sensoreinrichtung 102 kann beispielsweise direkt mit den Arbeitsanschlüssen des hydraulischen Verbrauchers 96 verbunden sein. Über die als Drucksensor ausgebildete Sensoreinrichtung 102 kann der Arbeitsdruck überwacht und ein entsprechendes Signal an die Steuereinheit 94 übertragen werden. Sollte der detektierte Arbeitsdruck den eingestellten maximalen Arbeitsdruck übersteigen bzw. erreichen, so wird eine zuvor von der Steuereinheit 94 vorgenommene Bestromung der Magnetspulenanordnung 40 unterbrochen, infolge dessen der Ventilschieber 16 durch die Stellfeder 55 wieder in seine Neutralstellung verbracht wird.

Ferner wird durch die Sensoreinheit 102 stets der Arbeitsdruck überwacht und von der Steuereinheit 94 bei einem Ausfall der Hydraulik, aufgrund des dann eintretenden Arbeitsdruckverlustes, eine sofortige Deaktivierung der Rastenfunktion der elektromagnetischen Raste 36 eingeleitet, woraufhin der Ventilschieber 16 automatisch wieder in seine Neutralstellung gerückt bzw. verschoben wird.

Anstelle einer den Arbeitsdruck überwachenden Sensoreinheit 102 bzw. zusätzlich zu einer den Arbeitsdruck überwachenden Sensoreinheit 102 kann auch eine die Drehzahl eines Motors eines mit der hydraulischen Anordnung 92 bestückten Fahrzeugs oder Geräts überwacht und von der Steuereinheit 94 zur Steuerung der Bestromung der elektromagnetischen Raste 36 herangezogen werden.

Ferner können auch andere Kriterien und Systemgrößen sensorisch überwacht und zur Steuerung der Bestromung der elektromagnetischen Raste 36 herangezogen werden, wobei auch weiterreichende Rastmodi denkbar sind, die auf andere hier nicht beschriebene Anwendungsbeispiele anwendbar sind.

Sollte es zu einem Ausfall der Elektronik kommen so wird der Ventilschieber ebenfalls durch die Stellfeder 55 in seine Neutralstellung verschoben.

Dadurch, dass die Eingabeeinrichtung 106 nicht mechanisch an die Rastwelle 26 gekoppelt ist, kann sie vorteilhafterweise direkt neben dem Betätigungshebel 53 oder an einer anderen beliebigen Stelle angeordnet werden, wodurch eine einfache und praktikable Bedienung der Rastmodiauswahl gegeben ist.

## Patentansprüche

1. Rasteneinrichtung (12) für ein hydraulisches Ventil (10), mit einem Gehäuse (22) und einer im Gehäuse (22) verschiebbar gelagerten Rastwelle (26), wobei die Rasteneinrichtung (12) wenigstens eine auf der Rastwelle (26) gelagerte magnetisierbare Ringankeranordnung (38) und eine am Gehäuse (22) um die Ringankeranordnung (38) angeordnete elektrische Magnetspulenanordnung (40) umfasst, wobei durch Bestromung der Magnetspulenanordnung (40) eine Stellkraft auf die Ringankeranordnung (38) erzeugbar ist, **dadurch gekennzeichnet,**
**dass** die Ringankeranordnung (38) beidseitig durch Halteringe (78, 80) axial gesichert ist und einen ersten ferromagnetischen Stellring (72) einen zweiten ferromagnetischen Stellring (74) und ein zwischen den Stellringen angeordnetes Spannelement (76) umfasst, durch welches die Stellringe (72, 74) axial auseinander rückbar und gegen die jeweiligen Halteringe (78, 80) drängbar sind.

2. Rasteneinrichtung (12) nach Anspruch 1, **dadurch gekennzeichnet, dass** die Ringankeranordnung (38) koaxial zur Rastwelle (26) angeordnet und derart mit dieser verbunden ist, dass die durch Bestromung der Magnetspulenanordnung (40) erzeugte Stellkraft in axialer Richtung der Rastwelle (26) auf die Rastwelle (26) übertragbar ist.

3. Rasteneinrichtung (12) nach Anspruch 1 oder 2, **dadurch gekennzeichnet, dass** die Rastwelle (26) mit einer Stellfederanordnung (29) verbunden ist, durch welche die Rastwelle (26) mit der Ringankeranordnung (38) in eine Neutralstellung drängbar ist, wobei in der Neutralstellung die Ringankeranordnung (38) mittig zur Magnetspulenanordnung (40) ausgerichtet ist.

4. Rasteneinrichtung (12) nach einem der Ansprüche 1 bis 3, **dadurch gekennzeichnet, dass** die Magnetspulenanordnung (40) eine erste und eine zweite Magnetspule (86, 88) umfasst, wobei die Magnetspulen (86, 88) mittensymmetrisch zur Magnetspulenanordnung (40) angeordnet sind.

5. Rasteneinrichtung (12) nach Anspruch 4, **dadurch gekennzeichnet, dass** die Rastwelle (26) mit der Ringankeranordnung (38) in eine erste Auslenkstellung verschiebbar ist, wobei mit der ersten Auslenkstellung die Ringankeranordnung (38) in Richtung der ersten Magnetspule (86) verbringbar ist.

6. Rasteneinrichtung (12) nach Anspruch 5, **dadurch gekennzeichnet, dass** die Rastwelle (26) mit der Ringankeranordnung (38) in eine der ersten Auslenkstellung entgegengesetzte zweite Auslenkstellung verschiebbar ist, wobei mit der zweiten Auslenkstellung die Ringankeranordnung (38) in Richtung der zweiten Magnetspule (88) verbringbar ist.

7. Rasteneinrichtung (12) nach Anspruch 5 oder 6, **dadurch gekennzeichnet, dass** in der ersten Auslenkstellung eine Bestromung der ersten Magnetspule (86) oder in der zweiten Auslenkstellung eine Bestromung der zweiten Magnetspule (88) aktivierbar bzw. deaktivierbar ist und in der Neutralstellung eine Bestromung der Magnetspulenanordnung (40) deaktivierbar ist.

8. Rasteneinrichtung (12) nach Anspruch 5 oder 6, **dadurch gekennzeichnet, dass** in der ersten Auslenkstellung eine Bestromung der ersten und zweiten Magnetspule (86, 88) oder in der zweiten Auslenkstellung eine Bestromung der ersten und zweiten Magnetspule (86, 88) aktivierbar ist und in der Neutralstellung eine Bestromung der Magnetspulenanordnung (40) deaktivierbar ist.

9. Rasteneinrichtung (12) nach einem der Ansprüche 1 bis 8, **dadurch gekennzeichnet, dass** die Rasteneinrichtung (12) ferner eine mechanische Raste (32) umfasst, wobei die mechanische Raste (32) wenigstens eine auf dem Umfang der Rastwelle (16) angeordnete Rastkugel (68), eine in der Rastwelle (16) eingebrachte Ringnut (66) und ein mit einer Stellkraft beaufschlagtes Steuerelement (70) umfasst, wobei das Steuerelement (70) mit der Rastkugel derart in Eingriff steht, dass die Rastkugel entsprechend der Stellkraft in die Ringnut (66) drängbar ist.

10. Rasteneinrichtung (12) nach einem der Ansprüche 1 bis 9, **dadurch gekennzeichnet, dass** die Rastwelle (16) mit der Ringankeranordnung (38) in eine über die erste oder zweite Auslenkstellung hinaus verschiebbare dritte Auslenkstellung verbringbar ist, in welcher die beiden Stellringe (72, 74) entgegen einer Stellkraft durch das Spannelement (76) zum gegenseitigen Anschlag verbringbar sind.

11. Hydraulisches Ventil (10) mit einem Ventilgehäuse (14), einem im Ventilgehäuse (14) verschiebbar gelagerten Ventilschieber (16) und einer Rasteneinrichtung (12), **dadurch gekennzeichnet, dass** die Rasteneinrichtung (12) nach einem der Ansprüche 1 bis 10 ausgebildet ist, wobei das Ventilgehäuse (14) und das Gehäuse (22) der Rasteneinrichtung (12) sowie der Ventilschieber (16) und die Rastwelle (26) einteilig oder mehrteilig miteinander in Verbindung stehen.

12. Hydraulische Anordnung (92) mit wenigstens einem über einen Betätigungshebel (53) betätigbaren hydraulischen Ventil (12) mit Rasteneinrichtung (12), wenigstens einem damit verbundenen hydraulischen Verbraucher (96), einer mit dem hydraulischen Ventil (10) verbundenen Hydraulikpumpe (98), einem mit dem hydraulischen Ventil (10) verbundenen Hydrauliktank (100), wenigstens einer mit dem hydraulischen Verbraucher (96) und/oder dem hydraulischen Ventil (10) verbundenen Sensoreinrichtung (102, 104), einer Eingabeeinrichtung (106) und einer mit der Sensoreinrichtung (102, 104) und der Eingabeeinrichtung (106) verbundenen elektronischen Steuereinheit (94), **dadurch gekennzeichnet, dass** die Rasteneinrichtung (12) nach einem der Ansprüche 1 bis 10 ausgebildet und die Magnetspulenanordnung (40) von der Steuereinheit in Abhängigkeit der Sensoreinrichtung (102, 104) und der Eingabeeinrichtung (106) bestrombar ist.

## Claims

1. Latch device (12) for a hydraulic valve (10), having a housing (22) and a latching shaft (26) which is displaceably mounted in the housing (22), wherein the latch device (12) comprises at least one magnetizable ring armature arrangement (38), which is mounted on the latching shaft (26), and an electrical magnet coil arrangement (40), which is arranged on the housing (22) around the ring armature arrangement (38), wherein an actuating force onto the ring armature arrangement (38) can be generated by supplying current to the magnet coil arrangement (40), **characterized in that** the ring armature arrangement (38) is axially secured on both sides by retaining rings (78, 80) and comprises a first ferromagnetic actuating ring (72), a second ferromagnetic actuating ring (74) and a clamping element (76) which is arranged between the actuating rings and by way of which the actuating rings (72, 74) can be moved axially away from one another and can be forced against the respective retaining rings (78, 80).

2. Latch device (12) according to Claim 1, **characterized in that** the ring armature arrangement (38) is arranged coaxially in relation to the latching shaft (26) and is connected to the said latching shaft in such a way that the actuating force which is generated by supplying current to the magnet coil arrangement (40) can be transmitted to the latching shaft (26) in the axial direction of the latching shaft (26).

3. Latch device (12) according to Claim 1 or 2, **characterized in that** the latching shaft (26) is connected to an actuating spring arrangement (29) by way of which the latching shaft (26) together with the ring armature arrangement (38) can be forced into a neutral position, wherein, in the neutral position, the ring armature arrangement (38) is oriented centrally in relation to the magnet coil arrangement (40).

4. Latch device (12) according to one of Claims 1 to 3, **characterized in that** the magnet coil arrangement (40) comprises a first and a second magnet coil (86, 88), wherein the magnet coils (86, 88) are arranged centre-symmetrically in relation to the magnet coil arrangement (40).

5. Latch device (12) according to Claim 4, **characterized in that** the latching shaft (26) with the ring armature arrangement (38) can be displaced into a first deflection position, wherein the ring armature arrangement (38) can be moved in the direction of the first magnet coil (86) by the first deflection position.

6. Latch device (12) according to Claim 5, **characterized in that** the latching shaft (26) with the ring armature arrangement (38) can be displaced into a second deflection position which is opposite the first deflection position, wherein the ring armature arrangement (38) can be moved in the direction of the second magnet coil (88) by the second deflection position.

7. Latch device (12) according to Claim 5 or 6, **characterized in that** a supply of current to the first magnet coil (86) can be activated or deactivated in the first deflection position or a supply of current to the second magnet coil (88) can be activated or deactivated in the second deflection position and a supply of current to the magnet coil arrangement (40) can be deactivated in the neutral position.

8. Latch device (12) according to Claim 5 or 6, **characterized in that** a supply of current to the first and the second magnet coil (86, 88) can be activated in the first deflection position or a supply of current to the first and the second magnet coil (86, 88) can be activated in the second deflection position and a supply of current to the magnet coil arrangement (40) can be deactivated in the neutral position.

9. Latch device (12) according to one of Claims 1 to 8, **characterized in that** the latch device (12) further comprises a mechanical latch (32), wherein the mechanical latch (32) comprises at least one latching ball (68) which is arranged on the circumference of the latching shaft (16), an annular groove (66) which is made in the latching shaft (16), and a control element (70) to which an actuating force is applied, wherein the control element (70) engages with the latching ball in such a way that the latching ball can be forced into the annular groove (66) in accordance with the actuating force.

10. Latch device (12) according to one of Claims 1 to 9, **characterized in that** the latching shaft (16) with the ring armature arrangement (38) can be moved into a third deflection position which can be displaced beyond the first or second deflection position and in which the two actuating rings (72, 74) can be brought to a mutual stop by the clamping element (76) against an actuating force.

11. Hydraulic valve (10) having a valve housing (14), a valve slide (16) which is displaceably mounted in the valve housing (14), and a latch device (12), **characterized in that** the latch device (12) is designed according to one of Claims 1 to 10, wherein the valve housing (14) and the housing (22) of the latch device (12) and also the valve slide (16) and the latching shaft (26) are connected to one another in a unipartite or multipartite manner.

12. Hydraulic arrangement (92) having at least one hydraulic valve (12) which can be operated by means of an operating lever (53) and has a latch device (12), having at least one hydraulic load (96) which is connected to the said hydraulic valve, having a hydraulic pump (98) which is connected to the hydraulic valve (10), having a hydraulic tank (100) which is connected to the hydraulic valve (10), having at least one sensor device (102, 104) which is connected to the hydraulic load (96) and/or to the hydraulic valve (10), having an input device (106) and having an electronic control unit (94) which is connected to the sensor device (102, 104) and to the input device (106), **characterized in that** the latch device (12) is designed according to one of Claims 1 to 10, and current can be supplied to the magnet coil arrangement (40) by the control unit depending on the sensor device (102, 104) and the input device (106).

## Revendications

1. Dispositif d'encliquetage (12) pour une soupape hydraulique (10), comprenant un boîtier (22) et un arbre d'encliquetage (26) supporté de manière déplaçable dans le boîtier (22), le dispositif d'encliquetage (12) comprenant au moins un agencement d'induit annulaire (38) magnétisable supporté sur l'arbre d'encliquetage (26) et un agencement de bobine magnétique électrique (40) disposé sur le boîtier (22) autour de l'agencement d'induit annulaire (38), une force de réglage pouvant être générée sur l'agencement d'induit annulaire (38) par alimentation électrique de l'agencement de bobine magnétique (40), **caractérisé en ce que** l'agencement d'induit annulaire (38) est fixé axialement des deux côtés par des bagues de retenue (78, 80) et comprend une première bague de réglage ferromagnétique (72), une deuxième bague de réglage ferromagnétique (74) et un élément de serrage (76) disposé entre les bagues de réglage, lequel permet d'écarter axialement l'une de l'autre les bagues de réglage (72, 74) et de les pousser contre les bagues de retenue respectives (78, 80).

2. Dispositif d'encliquetage (12) selon la revendication 1, **caractérisé en ce que** l'agencement d'induit annulaire (38) est disposé coaxialement par rapport à l'arbre d'encliquetage (26) et est connecté à celui-ci de telle sorte que la force de réglage générée par l'alimentation électrique de l'agencement de bobine magnétique (40) puisse être transmise à l'arbre d'encliquetage (26) dans la direction axiale de l'arbre d'encliquetage (26).

3. Dispositif d'encliquetage (12) selon la revendication 1 ou 2, **caractérisé en ce que** l'arbre d'encliquetage (26) est connecté à un agencement de ressort de réglage (29) qui permet de pousser l'arbre d'encliquetage (26) avec l'agencement d'induit annulaire (38) dans une position neutre, l'agencement d'induit annulaire (38) étant orienté centralement par rapport à l'agencement de bobine magnétique (40) dans la position neutre.

4. Dispositif d'encliquetage (12) selon l'une quelconque des revendications 1 à 3, **caractérisé en ce que** l'agencement de bobine magnétique (40) comprend une première et une deuxième bobine magnétique (86, 88), les bobines magnétiques (86, 88) étant disposées avec une symétrie centrale par rapport à l'agencement de bobine magnétique (40).

5. Dispositif d'encliquetage (12) selon la revendication 4, **caractérisé en ce que** l'arbre d'encliquetage (26) peut être déplacé avec l'agencement d'induit annulaire (38) dans une première position de déviation, l'agencement d'induit annulaire (38), avec la première position de déviation, pouvant être amené dans la direction de la première bobine magnétique (86).

6. Dispositif d'encliquetage (12) selon la revendication 5, **caractérisé en ce que** l'arbre d'encliquetage (26) peut être déplacé avec l'agencement d'induit annulaire (38) dans une deuxième position de déviation opposée à la première position de déviation, l'agencement d'induit annulaire (38), avec la deuxième position de déviation, pouvant être amené dans la direction de la deuxième bobine magnétique (88).

7. Dispositif d'encliquetage (12) selon la revendication 5 ou 6, **caractérisé en ce que** dans la première position de déviation, une alimentation électrique de la première bobine magnétique (86) ou dans la deuxième position de déviation, une alimentation électrique de la deuxième bobine magnétique (88), peut être activée ou désactivée et dans la position neutre, une alimentation électrique de l'agencement de bobine magnétique (40) peut être désactivée.

8. Dispositif d'encliquetage (12) selon la revendication 5 ou 6, **caractérisé en ce que** dans la première position de déviation, une alimentation électrique de la première et de la deuxième bobine magnétique (86, 88) ou dans la deuxième position de déviation, une alimentation électrique de la première et de la deuxième bobine magnétique (86, 88), peut être activée et dans la position neutre, une alimentation électrique de l'agencement de bobine magnétique (40) peut être désactivée.

9. Dispositif d'encliquetage (12) selon l'une quelconque des revendications 1 à 8, **caractérisé en ce que** le dispositif d'encliquetage (12) comprend en outre un cliquet mécanique (32), le cliquet mécanique (32) comprenant au moins une rotule d'encliquetage (68) disposée sur la périphérie de l'arbre d'encliquetage (16), une rainure annulaire (66) réalisée dans l'arbre d'encliquetage (16) et un élément de commande (70) sollicité avec une force de réglage, l'élément de commande (70) étant en prise avec la rotule d'encliquetage de telle sorte que la rotule d'encliquetage puisse être poussée de manière correspondant à la force de réglage dans la rainure annulaire (66).

10. Dispositif d'encliquetage (12) selon l'une quelconque des revendications 1 à 9, **caractérisé en ce que** l'arbre d'encliquetage (16) avec l'agencement d'induit annulaire (38) peut être amené dans une troisième position de déviation déplaçable au-delà de la première ou de la deuxième position de déviation, dans laquelle les deux bagues de réglage (72, 74) peuvent être amenées à l'encontre d'une force de réglage par l'élément de serrage (76) jusqu'à la butée opposée.

11. Soupape hydraulique (10) comprenant un boîtier de soupape (14), un tiroir de soupape (16) supporté de manière déplaçable dans le boîtier de soupape (14) et un dispositif d'encliquetage (12), **caractérisée en ce que** le dispositif d'encliquetage (12) est réalisé selon l'une quelconque des revendications 1 à 10, le boîtier de soupape (14) et le boîtier (22) du dispositif d'encliquetage (12) ainsi que le tiroir de soupape (16) et l'arbre d'encliquetage (26) étant en liaison les uns avec les autres d'une seule pièce ou en plusieurs pièces.

12. Agencement hydraulique (92) comprenant au moins une soupape hydraulique (12) pouvant être actionnée par le biais d'un levier d'actionnement (53) avec un dispositif d'encliquetage (12), au moins un consommateur hydraulique (96) connecté à celle-ci, une pompe hydraulique (98) connectée à la soupape hydraulique (10), un réservoir hydraulique (100) connecté à la soupape hydraulique (10), au moins un dispositif de capteur (102, 104) connecté au consommateur hydraulique (96) et/ou à la soupape hydraulique (10), un dispositif de saisie (106) et une unité de commande électronique (94) connectée au dispositif de capteur (102, 104) et au dispositif de saisie (106), **caractérisé en ce que** le dispositif d'encliquetage (12) est réalisé selon l'une quelconque des revendications 1 à 10 et l'agencement de bobine magnétique (40) peut être alimenté en courant électrique par l'unité de commande en fonction du dispositif de capteur (102, 104) et du dispositif de saisie (106).
